# EUROPEAN PATENT SPECIFICATION

(11) **EP 0 541 637 B1**
(45) Date of publication and mention of the grant of the patent: **13.03.1996**
(21) Application number: 91913925.3
(22) Date of filing: 24.07.1991
(51) Int. Cl.: C02F 1/52, C02F 1/76, C02F 9/00

(54) **A PROCESS FOR PURIFYING IMPOTABLE WATER AND WASTEWATER WITH HYPOCHLOROUS ACID**
VERFAHREN ZUR REINIGUNG NICHT TRINKBAREN WASSERS UND ABWASSERS MIT HYPOCHLORIGER SÄURE
PROCEDE D'EPURATION D'EAU NON POTABLE ET D'EAU RESIDUELLE A L'AIDE D'ACIDE HYPOCHLOREUX

(30) Priority: 26.07.1990 US 558713; 26.07.1990 US 558714
(43) Date of publication of application: 19.05.1993
(73) Proprietor: OLIN CORPORATION, Cheshire, CT 06410-0586 (US)
(72) Inventor: DUNCAN, Budd, L., Athens, TN 37303 (US); NESS, Richard, C., Cleveland, TN 37303 (US); MENDIRATTA, Sudhir, K., Cleveland, TN 37312 (US); LEONARD, Donald, R., Athens, TN 37303 (US)
(74) Representative: Baker, Colin John
(86) International application number: US9105230
(87) International publication number: WO9201634

(56) References cited:
- WO-A-90/00511
- US-A- 3 649 493
- US-A- 3 730 881
- US-A- 4 693 832
- DATABASE WPI Section Ch, Week 7937, Derwent Publications Ltd., London, GB; Class D15, AN 79-67312B

## Description

This invention relates to the purification of impotable water and wastewater. More particularly, this invention relates to the purification of impotable water and wastewater using hypochlorous acid.

For many years chlorine has been recognized as a good disinfectant and in one form or another has been involved in the majority of systems designed to treat water. In almost all modern water or sewage treatment plants, for example, chlorine is used to reduce the number of bacteria from the final effluent before it is discharged from the system to a potable water distribution system or into a river or stream. A chlorination plant or system may also provide for removing color, correcting tastes, eliminating odor and suppressing other types of undesirable biological growths. Chlorine is also widely used in the treatment of industrial wastes and waste waters

Substantial advances in the chemistry of water chlorination have been made in recent decades. This chemistry is known to be relatively complex and various aspects of water chlorination chemistry may be reviewed in "Handbook of Chlorination" by G. C. White (Van Nostrand Reinhold, Second Edition, NYC, 1986).

When chlorine dissolves in water, a mixture of hypochlorous and hydrochloric acid is formed. The hydrochloric acid always completely dissociates into hydrogen and chloride ions, whereas the hypochlorous acid only partially dissociates into hydrogen and hypochlorite ions as a function of the pH of the water. In either the hypochlorous or hypochlorite form, chlorine is called "free chlorine residual". Free chlorine residual has a highly effective killing power toward bacteria.

Three forms of available chlorine, namely, molecular chlorine (Cl₂), unionized hypochlorous acid (HOCl) and the hypochlorite ion (OCl⁻), exist together in equilibrium, the relative proportions of each being determined by the pH value and temperature of the water. These forms of "available" chlorine react relatively rapidly with various types of water components including algae and bacteria as well as certain nitrogen and hydrocarbon compounds.

Dissolved molecular Cl₂ is also believed to be a very potent disinfecting agent, but does not exist in any appreciable quantity under equilibrium conditions at the pH of most water bodies. The pH must be reduced to a relatively low value in order to enable molecular Cl₂ to exist in solution in substantial concentrations.

The "available" forms of chlorine compounds are known to be generally more potent than the "combined" forms, i.e. chloramines, which are produced by reaction with compounds present in the water to be treated. Should the chlorinated water contain ammonia or certain amino (nitrogen-based) compounds, as is invariably the case with sewage, then additional compounds called chloramines are created. Chloramines may occur almost instantaneously, depending mainly on water pH. Though several reactions are possible between hypochlorous acid and ammonia, chloramines collectively are referred to as "combined chlorine residual". This combined chlorine residual has a much lower bacterial effect than free chlorine residual.

Domestic wastewater is typically high in ammonia, the ammonia resulting primarily from hydrolysis of urea. Almost all of the inorganic nitrogen formed in solutions that enter a waste treatment plant is normally in the least oxidized, ammonia form. In conventional secondary waste treatment, a portion of the ammonia will be completely nitrified to nitrite, some ammonia will be only partially nitrified to nitrite, and a portion will remain as ammonia.

When sufficiently high chlorine dosages are applied to waters containing ammonia, different reactions will occur, resulting in the destruction of the ammonia and the formation of free chlorine residual. Thus, for water containing a known amount of ammonia, if one starts with a chlorine dosage which is low, chloramines will be formed resulting in a combined chlorine residual whose bacterial effect is relatively weak.

As the dosage is raised, the amount of combined chlorine residual produced also increases, until a peak is reached when all of the free ammonia is used up in the formation of chloramine. As the dosage is elevated beyond the level at which the combined chlorine residual peaks, destruction of the chloramines, which are unstable, takes place until a breakpoint is reached indicating that chloramine destruction is at its maximum. At breakpoint, the first persistent appearance of free chlorine occurs. Thus, by using a chlorine dosage sufficient to attain the breakpoint state, one is able to get rid of virtually all ammonia and most of the chloramines.

Many applications exist for chlorine in wastewater treatment facilities, such as for odor control of raw sewage and the control of hydrogen sulfide in sewers, but its most universal application lies in wastewater treatment facilities for the terminal disinfection of the treated plant effluent just before the effluent is discharged.

The formation of compounds suspected of being carcinogenic as a result of the reaction of chlorine with hydrocarbons in wastewater is by no means the only unwanted side effect caused by the traditional disinfection process, for chlorine residuals in wastewater give rise to an environment that is toxic to aquatic organisms. Though chlorine is a highly effective biocide for undesirable organism, it is also deadly to fish and other forms of aquatic life and therefore, has a deleterious impact on fresh water eco-systems.

In general, wastewater disinfection practice has heretofore largely disregarded these unwanted side effects, for this practice focused on the two factors thought to be of greatest significance in attaining adequate disinfection; namely, the residual of the disinfectant and its contact time with the sewage. This practice has brought about the use of massive doses of chlorine disinfectant in long serpentine channels serving to prolong contact time. While this produced the desired degree of disinfection, it also aggravated unwanted side effects.

It has been postulated that disinfection can be enhanced by improving sewage-aqueous chlorine mixing and by lowering the chlorine reaction pH. In treating water, the "Operation of chlorination equipment which supplies Cl₂ gas to water operates at partial pressures (vacuum). At the vacuum levels currently being used the maximum solubility is about 5000 mg/l. The upper limit of solubility recommended by all chlorinator manufacturers is 3500 mg/l. This arbitrary figure has been successful in preventing solution discharge systems from being adversely affected by gas pockets in the solution piping and off-gassing at the point of application." (White op. cit. pp. 37-38).

U.S. Patent No.4,693,832, issued September 15, 1987 to M.M. Hurst, describes a method of preparing potable water by mixing into semi-finished water an aqueous solution of hypochlorous acid having a pH of between about 3 and about 6 in amounts which provide the water with a free chlorine residual of at least about 0.5 ppm. The aqueous solutions contain between 0.1 and 10 grams of HOCl per liter. ie method employs dilute solutions of impure hypochlorous acid having high pH values. These HOCl solutions are stated to provide the water with free available chlorine residuals having improved stability. However, to obtain the required pH range it is necessary to supply a base to the hypochlorous acid solution or employ a method of preparation which will prepare hypochlorous acid solutions having the desired pH.

It is an object of the present invention to provide a process for preparing potable water or disinfected wastewater by treating the water with a highly pure, highly acidic solution of hypochlorous acid.

It is an added object of the present invention to provide a process for preparing potable water or disinfected wastewater having reduced formation of trihalomethane compounds.

It is a further object of the present invention to provide a process for preparing potable water or disinfected wastewater in which the feed rate of the chlorinating agent is easily controlled.

It is another object of the present invention to provide a process for treating impotable water or wastewater in which the dispersion of the chlorinating agent is both simplified and expedited.

It is an additional object of the present invention to provide a process for treating water which does not require the handling of pressurized gaseous or liquid chlorine.

These and other advantages are accomplished in a process for treating water the improvement which comprises admixing with the water at least 0.5 percent by weight of a solution consisting of hypochlorous acid having a pH of less than 3.

The essential features of the invention are disclosed in claim 1. Additional features are disclosed in claims 2 to 10.

The novel process of the present invention employs as the chlorinating agent a concentrated solution of high purity hypochlorous acid, HOCl. One method of producing high purity concentrated HOCl solutions is that in which gaseous mixtures, having high concentrations of hypochlorous acid vapors and chlorine monoxide gas and controlled amounts of water vapor are produced, for example, by the process described by J. P. Brennan et al in U.S. Patent No. 4,147,761. The gaseous mixture is then converted to a concentrated hypochlorous acid solution as described in WO 90/05111 published May 17, 1990 by J. K. Melton et al.

The concentrated hypochlorous acid solution employed as a reactant contains preferably from 0.5 to 60 percent by weight of HOCl. Preferred solutions are those having concentrations in the range of from 1 to 45, and more preferably from 5 to 15 percent by weight of HOCl.

The solution is substantially free of ionic impurities such as chloride ions and alkali metal ions and has low concentrations of dissolved chlorine. For example, concentrations of the chloride ion are preferably less than about 50 parts per million and the alkali metal ion concentration is preferably less than about 50 parts per million. The dissolved chlorine concentration in the hypochlorous acid solution is normally less than 2 percent, and preferably less than 1 percent by weight.

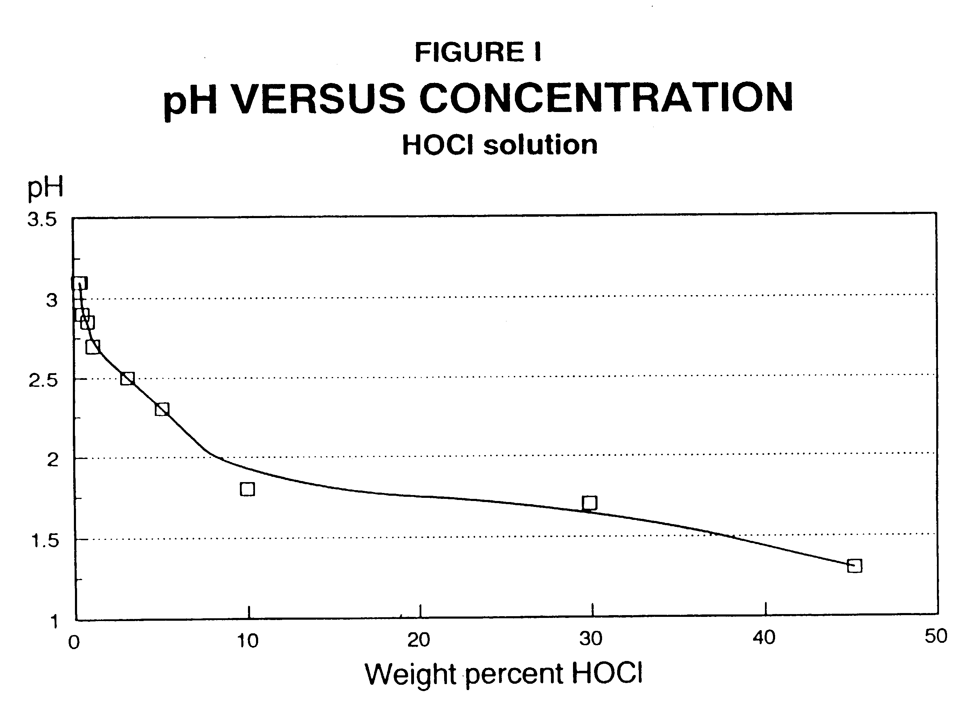

The FIGURE graphically depicts the pH of HOCl solutions having concentrations in the range of 0.1 to 45 weight percent of HOCl. As shown, the pH of dilute highly pure HOCl solutions is less than 3, and as the concentration of HOCl increases, the pH is further reduced, thus for highly concentrated solutions the pH falls below 0, i.e. the solutions cannot be adequately described by a pH designation.

In the purification of wastewater, the initial step in the treatment process, after the removal of insoluble solids, is often the removal of dissolved solids. Depending on the volume of wastewater of be treated, various methods including ion exchange, reverse osmosis, pH adjustment, aeration, and biological oxidation, among others, can be used separately or in combination. One of the most common ways to convert soluble organic solids to insoluble solids is through biological oxidation. Soluble organics metabolized by bacteria are converted to carbon dioxide and bacterial floc which can be settled from solution. To maintain the waste in a fresh condition and to prevent septicity, in the novel process of the present invention, a pre-disinfection dose of the highly acidic hypochlorous acid solution having a pH of less than 3 is employed. The addition of the hypochlorous acid solution to maintain fresh waste prior to sedimentation or clarification results in improved settling rates of the insoluble organic solids and eliminates septicity in settled sludge thereby preventing it from rising in the clarifier or settler. As the use of hypochlorous acid reduces the amount of chloride formed in the solution over the use of chlorine by 50 percent, any possible interference in the digestion step by the presence of chlorides should be substantially reduced.

Where the presence of filimentous bacteria is sufficient to cause sludge bulking, poor settling in the clarifier or settler, for the activated sludge produced during biological oxidation, the addition of the highly acidic hypochlorous acid solution kills the filimentous bacteria and eliminates sludge bulking. The dose of hypochlorous acid used to prevent sludge bulking in a wastewater treatment process where the activated sludge is recycled varies with an average amount being about 5 mg/l based on the return sludge flow. Higher or lower doses may be employed.

After the dissolved solid particles in the wastewater have been removed, the wastewater filtrate is then subjected to a disinfection treatment by admixing the solution consisting of hypochlorous acid having a pH of less than 3. The highly acidic hypochlorous acid solution may be added directly to the wastewater as it readily mixes with the wastewater to kill the pathogens present and produce a disinfected water supply. Further, in wastewater treatment plants which introduce chlorine gas into a stream of water to provide adequate mixing prior to addition to the body of wastewater, the hypochlorous acid solution may also be fed to this carrier stream. Sufficient amounts of the acidic hypochlorous acid solution are added to kill the pathogens present and produce a disinfected wastewater supply without providing the wastewater with a significant chlorine residual. Hypochlorous acid has the highest oxidation potential of chlorine-containing disinfecting agents, i.e. E°=1.440 volts vs 1.395 for Cl₂ and 1.120 for NaOCl. This allows the use of lesser amounts of HOCl to achieve equivalent disinfecting action. Disinfecting amounts of the acidic hypochlorous acid solution are related to the nature and concentration of the pollutants. Suitable amounts include those which provide the wastewater with from about 1 to about 50 mg/l, and preferably with from about 10 to about 30 mg/l. The disinfected waste water has substantially no residual available chlorine or is treated with a reducing agent such as hydrogen peroxide or a sulfite compound, i.e. bisulfite or thiosulfate to remove any residual available chlorine. The treated wastewater is suitable for use in an industrial process or for discharge in a navigable waterway.

Similarly, in the purification of impotable water, the initial step in the treatment process is often the use of a limited amount of an oxidizing agent, including for example, hydrogen peroxide, ozone or chlorine-containing compounds such as chlorine or hypochlorites. The amount of oxidizing agent used may vary from a minimal amount to keep the lines and equipment free of undesirable organisms, to that which satisfies the "chlorine demand", that is, the amount of chlorine which is consumed by water impurities without providing a substantial amount of unconsumed chlorine which remains as residual available chlorine. This initial oxidation step is carried out using the highly acidic hypochlorous acid solution having a pH of less than 3.

Following the initial addition of an oxidizing agent, where used, it is commonplace to treat the pre-disinfected impotable water with a flocculant such as alum, which is utilized as a coagulation agent for allowing the flocculation of solid particles to take place. Suitable flocculants include trivalent aluminum compounds, Al(III), such as alum, trivalent iron compounds, Fe(III), i.e., ferric chloride, as well as compounds of other multivalent metal cations e.g. Pb(II).

It will be understood that the order of addition of the oxidizing agent is not critical, and that it may be added simultaneously with the flocculant, as well as after the addition of the flocculant. Addition of the hypochlorous acid solution during flocculation assists in the removal of algae, as the dead cells of these organisms are more readily coagulated. In any case, the addition of the oxidizing agent is carried out prior to the sedimentation period which normally is at least 2 hours long.

After the solid particles suspended in the impotable water have been removed, for example, by sedimentation and/or filtration, the impotable water filtrate is then subjected to a disinfection treatment by admixing at least 0.5 percent by weight of the solution consisting of hypochlorous acid having a pH of less than 3. The highly acidic hypochlorous acid solution may be added directly to the impotable water as it readily mixes with the impotable water to kill the pathogens present and produce a potable water supply. Further, in water treatment plants which introduce chlorine gas into a stream of water to provide adequate mixing prior to addition to the body of impotable water, the hypochlorous acid solution may also be fed to this carrier stream.

The potable water, now ready for distribution to the ultimate consumers, contains available chlorine residuals in amounts which will provide a safe water supply throughout the distribution system. Suitable residuals measured as available chlorine include those in the range of from about 0.2 to about 0.5 ppm.

The novel process of the present invention provides rapid, intimate mixing of the highly pure, highly acidic hypochlorous acid solution with the water stream to disinfect wastewater bodies while minimizing unwanted side effects. In addition, the novel process of the present invention produces potable water in a treatment which minimizes the formation of toxic organic chlorine compounds such as trihalomethanes (THM). The process eliminates the need for storing and handling pressurized gaseous or liquid chlorine.

The process of the present invention is further illustrated by the following examples with no intention of being limited thereby. All parts and percentages are by weight unless otherwise indicated.

### EXAMPLE 1

Impotable river water (1000 mls) was adjusted to a pH of 4 by the addition of sulfuric acid. The water was divided into two equal portions. To one portion of a calcium hypochlorite solution [0.2% Ca(OCl₂)] was added to provide 4 ppm of available chlorine. The second portion was treated with a 2% solution of HOCl having a pH of 3. After a period of six hours, the water treated with calcium hypochlorite was analyzed and found to contain 18 parts per billion (ppb) of chloroform. The water treated with HOcl after six hours contained 8 ppb of chloroform. Coliform disinfection was total in both portions.

### EXAMPLE 2

The procedure of EXAMPLE 1 was repeated using portions of the river water with the pH at 7. The portion treated with the hypochlorite solution contained 110 ppb of chloroform. The HOCl treated water portion contained only 100 ppb of chloroform. Coliform disinfection was total in both portions of river water.

EXAMPLES 1 and 2 show that while disinfection of water is accomplished by both chlorinating agents, a reduction in the concentrations of chloroform produced is achieved by the process of the invention.

### EXAMPLE 3

An 8 liter sample of impotable pond water at a pH of 8.5 was divided into two portions. One portion of the water was treated with a solution of NaOCl (5%) to provide the pond water with 2 ppm of available chlorine. To a second equal portion of pond water was added a hypochlorous acid solution containing 30% by weight of HOCl and having a pH of less than 2 to provide 2 ppm of available chlorine. Each portion was periodically analyzed for trihalomethane concentrations. The results are given in TABLE I below.

**TABLE 1**

| TOTAL TRIHALOMETHANES (ppb) IN POND WATER (pH 8.5) | | |
|---|---|---|
| Time (min) | H₂O Treated With HOCl | H₂O Treated With NaOCl |
| 30 | 5 | 18 |
| 60 | 11 | 21 |
| 90 | 16 | 30 |
| 180 | 22 | 30 |

A significant reduction in trihalomethanes was attained using the highly acidic hypochlorous acid solution in alkaline pond water.

## Claims

1. A process for treating wastewater characterised by admixing with the wastewater a solution consisting of hypochlorous acid substantially free of ionic impurities containing at least 0.5 percent by weight of HOCl and having a pH of less than 3, to prepare disinfected wastewater having substantially no available chlorine content.

2. The process of claim 1 characterised in that the concentration of hypochlorous acid is from 1 to 45 by weight of HOCl.

3. The process of either preceding claim characterised in that the hypochlorous acid has a dissolved chlorine concentration of less than 2 percent by weight.

4. A process according to claim 1 for sanitizing wastewater containing dissolved solids characterised by admixing with the wastewater a preliminary dose of said hypochlorous acid solution to form a pre-disinfected wastewater, admixing a biological oxidation agent with the pre-disinfected wastewater to remove dissolved solids, and admixing with the wastewater a sanitizing amount of a second dose of said hypochlorous acid solution to prepare disinfected wastewater having substantially no available chlorine residual.

5. The process of any preceding claim characterised in that the concentration of hypochlorous acid is from 5 to 15 percent by weight of HOCl.

6. A process according to claim 1 for sanitizing impotable water characterised by admixing with the impotable water a preliminary dose of a said hypochlorous acid solution, wherein said solution contains at least 0.5 percent by weight of HOCl, to form a pre-disinfected impotable water, admixing a flocculating agent with the pre-disinfected impotable water, and admixing with the pre-disinfected impotable water a sanitizing amount of a second dose of a said solution which second dose also contains at least 0.5 percent by weight of HOCl, to prepare potable water having an available chlorine residual.

7. The process of claim 6 characterised in that the pre-disinfected water is filtered.

8. The process of claim 7 characterised in that the second solution has a concentration of hypochlorous acid of from 1 to 45 by weight of HOCl.

9. The process of claim 8 characterised in that the first solution and the second solution of hypochlorous acid each has a dissolved chlorine concentration of less than 2 percent by weight.

10. The process of claim 6 characterised in that the concentration of hypochlorous acid in the first solution is from 5 to 15 percent by weight of HOCl.

## Patentansprüche

1. Verfahren zur Behandlung von Abwässern, **gekennzeichnet** durch Zumischung einer Lösung von hypochloriger Säure mit wenigstens 0,5 Gewichtsprozent HOCl und einem pH-Wert kleiner 3, die im wesentlichen frei von ionischen Verunreinigungen ist, zum Abwasser, um desinfiziertes Abwasser herzustellen, welches im wesentlichen kein verfügbares Clor aufweist.

2. Verfahren nach Anspruch 1, **dadurch gekennzeichnet,** daß die Konzentration von hypochloriger Säure zwischen 1 bis 45 Gewichtsprozent HOCl beträgt.

3. Verfahren nach Anspruch 1 oder 2, **dadurch gekennzeichnet,** daß die hypochlorige Säure eine Konzentration an gelöstem Chlor von weniger als 2 Gewichtsprozent aufweist.

4. Verfahren nach Anspruch 1 zur Desinfizierung von Abwasser mit gelösten Feststoffen, **gekennzeichnet** durch Zumischen einer Vordosis der Lösung von hypochloririger Säure zum Abwasser zur Erzeugung eines vordesinfizierten Abwassers, Zumischen eines biologischen Oxidationsmittels zu dem vordesinfizierten Abwasser zur Entfernung gelöster Feststoffe und Zumischen einer desinfizierenden Menge einer zweiten Dosis der hypochlorige Säure enthaltenden Lösung zum Abwasser zur Erzeugung von desinfiziertem Abwasser, welches im wesentlichen keinen Restgehalt an verfügbarem Chlor aufweist.

5. Verfahren nach einem der Ansprüche 1 bis 4, **dadurch gekennzeichnet,** daß die Konzentration an hypochloriger Säure zwischen 5 bis 15 Gewichtsprozent HOCl beträgt.

6. Verfahren nach Anspruch 1 zur Desinfizierung von nicht trinkbarem Wasser, **dadurch gekennzeichnet**, daß dem nichttrinkbarem Wasser eine Vordosis der Lösung von hypochloriger Säure zur Erzeugung eines vordesinfizierten nichttrinkbaren Wassers zugemischt wird, wobei die Lösung wenigstens 0,5 Gewichtsprozent HOCl enthält, Zumischen eines Flockungsmittels zu dem vordesinfizierten nichttrinkbaren Wasser und Zumischen einer desinfizierenden Menge der besagten Lösung in einer zweiten Dosis zu dem vordesinfizierten nichttrinkbaren Wasser, wobei die zweite Dosis ebenso wenigstens 0,5 Gewichtsprozent HOCl enthält, zur Erzeugung trinkbaren Wassers mit einem Restgehalt an verfügbarem Chlor.

7. Verfahren nach Anspruch 6, **dadurch gekennzeichnet**, daß das vordesinfizierte Wasser filtriert ist.

8. Verfahren nach Anspruch 7, **dadurch gekennzeichnet**, daß die zweite Lösung eine Konzentration von hypochloriger Säure von 1 bis 45 Gewichtsprozent HOCl enthält.

9. Verfahren nach Anspruch 8, **dadurch gekennzeichnet**, daß die erste Lösung und die zweite Lösung von hypochloriger Säure jeweils eine gelöste Chlorkonzentration von weniger als 2 Gewichtsprozent aufweisen.

10. Verfahren nach Anspruch 6, **dadurch gekennzeichnet**, daß die Konzentration an hypochloriger Säure der ersten Lösung zwischen 5 bis 15 Gewichtsprozent HOCl beträgt.

## Revendications

1. Procédé pour le traitement d'eaux usées, caractérisé en ce qu'on mélange aux eaux usées une solution consistant en acide hypochloreux, pratiquement dépourvue d'impuretés ioniques contenant au moins 0,5% en poids de HOCl et ayant un pH de moins de 3, pour préparer des eaux usées désinfectées n'ayant pratiquement pas de teneur en chlore disponible.

2. Procédé suivant la revendication 1, caractérisé en ce que la concentration de l'acide hypochloreux est comprise entre 1 et 45% en poids de HOCl.

3. Procédé suivant l'une des revendications précédentes, caractérisé en ce que l'acide hypochloreux a une concentration de chlore dissous inférieure à 2% en poids.

4. Procédé suivant la revendication 1 pour l'assainissement d'eaux usées contenant des solides dissous, caractérisé en ce qu'on mélange aux eaux usées une dose préliminaire de cette solution d'acide hypochloreux pour former des eaux usées pré-désinfectées, on mélange un agent d'oxydation biologique aux eaux usées pré-désinfectées pour éliminer les solides dissous, et l'on mélange aux eaux usées une quantité efficace pour obtenir un assainissement d'une seconde dose de cette solution d'acide hypochloreux pour préparer des eaux usées désinfectées n'ayant pratiquement pas de résidu de chlore disponible.

5. Procédé suivant l'une quelconque des revendications précédentes, caractérisé en ce que la concentration de l'acide hypochloreux est comprise entre 5 et 15% en poids de HOCl.

6. Procédé suivant la revendication 1 pour l'assainissement d'eau non potable, caractérisé en ce qu'on mélange à l'eau non potable une dose préliminaire de cette solution d'acide hypochloreux, laquelle solution contient au moins 0,5% en poids de HOCl, pour former une eau non potable pré-désinfectée, on mélange un agent floculant à l'eau non-potable pré-désinfectée et l'on mélange à l'eau non potable pré-désinfectée une quantité efficace pour obtenir un assainissement d'une seconde dose de cette solution d'acide, laquelle seconde dose contient aussi au moins 0,5% en poids de HOCl, pour préparer une eau potable ayant un résidu de chlore disponible.

7. Procédé suivant la revendication 6, caractérisé en ce que l'eau pré-désinfectée est filtrée.

8. Procédé suivant la revendication 7, caractérisé en ce que la seconde solution a une concentration de l'acide hypochloreux comprise entre 1 et 45% en poids de HOCl.

9. Procédé suivant la revendication 8, caractérisé en ce la première solution et la seconde solution d'acide hypochloreux ont chacune une concentration en chlore dissous inférieure à 2% en poids.

10. Procédé suivant la revendication 6, caractérisé en ce que la concentration de l'acide hypochloreux dans la première solution est comprise entre 5 et 15% en poids de HOCl.
